# EUROPEAN PATENT APPLICATION

(11) **EP 3 812 196 A1**
(43) Date of publication of application: **28.04.2021**
(21) Application number: 19205184.5
(22) Date of filing: 24.10.2019
(51) Int. Cl.: B60L 50/60, B60K 7/00, B60L 15/20

(54) **PROPULSION SYSTEM FOR ELECTRIC VEHCILE AND METHOD FOR CONTROLLING THE PROPULSION SYSTEM**

(71) Applicant: Volvo Car Corporation, 40531 Göteborg (SE)
(72) Inventor: CHIRITESCU, Stefan-Daniel, SE-423 39 TORSLANDA (SE)
(74) Representative: Kransell & Wennborg KB

(57) **Abstract**

The disclosed subject matter relates to a propulsion system (100) for a vehicle, where the propulsion system comprises two electric machines (106, 108) for each wheel (104) of the vehicle. The two electric machines are connected by a clutch (110) such that it can be controlled if one or both of the electric machines are operated to provide power to the wheel for vehicle propulsion. In the same manner, the clutch and the electric machines can be controlled to such that only one or moth of the electric machines are used for generating power, for example by means of regenerative braking.

## Description

### TECHNICAL FIELD

The present disclosure relates to a propulsion system for an electric vehicle, wherein the propulsion system comprises a plurality of electric machines connected to respective wheels of the vehicle.

### BACKGROUND

Propulsion technologies for vehicles are evolving to reduce the dependence on fossil fuels, and a promising alternative to internal combustion engines are electric drive systems. To facilitate a large-scale introduction of vehicles comprising electric drive systems, there is a need to develop electric drive systems which are both energy efficient and cost competitive.

One challenge when attempting to replace the combustion engine as power source in a vehicle is to provide an electric propulsion system capable of providing the same power as the combustion engine while still being cost competitive and having a size suitable for vehicle integration.

Electric propulsion systems are also expected to provide the same functionalities as modern drivetrains powered by combustion engines, such as all-wheel drive and torque vectoring.

Accordingly, it is desirable to develop electric propulsion systems which offer the desired functionality at a competitive cost.

### SUMMARY

In general, the disclosed subject matter relates to a propulsion system for a vehicle, where the propulsion system comprises two electric machines for each wheel of the vehicle. The two electric machines are connected by a clutch such that it can be controlled if one or both of the electric machines are operated to provide power to the respective wheel for vehicle propulsion. In the same manner, the clutch and the electric machines can be controlled to such that only one or both of the electric machines are used when generating power, for example by means of regenerative braking.

The first electric machine is located closest to the wheel and may be connected directly to the wheel, or it may be connected via a gearbox, depending on the type of electric machine, and the second electric machine is operatively coupled to the first electric machine via a clutch. For a conventional four-wheeled vehicle, this means that the vehicle comprises eight electrical machines arranged in four pairs of machines.

Each of the first and second electric machines are individually controllable by a propulsion system control unit configured to operate the propulsion system in one of a plurality of predetermined operating modes. Examples of operating modes include two-wheel or four-wheel drive using one or two electric machines for each wheel. Which operating mode to select for a specific situation may be based on a wide range of parameters, such as the power requested by a driver of the vehicle, the state of the battery, road and traffic conditions etc.

With the described system, a propulsion system with very high flexibility is provided since the vehicle can be operated in a wide variety of different modes, and the mode can be selected for the specific requirements at hand. Moreover, due to the number of electric machines used, each electric machine can made smaller compared to electric propulsion systems comprising fewer electric machines, such that the overall cost of the system can be comparable or even lower than for existing systems.

### BRIEF DESCRIPTION OF DRAWINGS

FIG. 1 is a schematic illustration of a propulsion system according to an embodiment of the invention;
Figs. 2A-D is a schematic illustration of a propulsion system according to an embodiment of the invention; and
Fig. 3 is a flow chart outlining general steps of a method for controlling a propulsion system according to an embodiment of the invention.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

Moreover, various embodiments of the present invention will be described with reference to a vehicle comprising four wheels. The invention is however applicable to also to vehicles having more or fewer than four wheels.

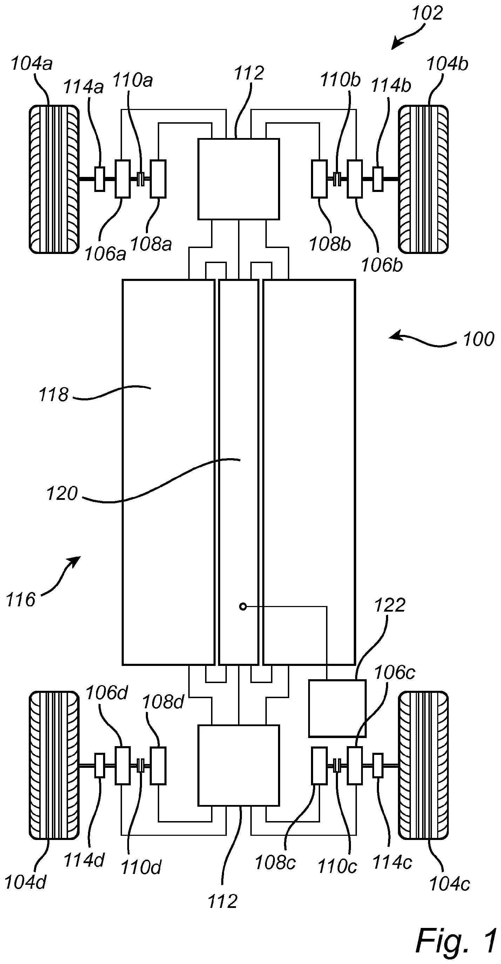

Fig. 1 schematically illustrates a propulsion system 100 for a vehicle 102, the propulsion system 100 comprising: for each wheel 104a-d of the vehicle, a first electric machine 106a-d operatively connected to the wheel 104a-d and a second electric machine 108a-d connected to the first electric machine 106a-d via a clutch 110a-d, and wherein each of the first and second electric machines 106a-d, 108a-d, are individually controllable by a propulsion system control unit 112 configured to operate the propulsion system 100 in one of a plurality of predetermined operating modes.

The control unit 112 may include a microprocessor, microcontroller, programmable digital signal processor or another programmable device. The control unit 112 may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. Moreover, the functionality of the control unit 112 may be provided by a single dedicated control unit of may be provided by means of a plurality of distributed control units 112. The control unit 112 may also be referred to as an ECU (Electronic Control Unit).

For simplicity, the propulsion system 100 will mainly be discussed with reference to one pair of electric machines 106a, 108a operatively connected to one wheel 104a. It should be noted that in the described propulsion system, each of the four wheels is connected to the same type of electric machines connected via a clutch. Thereby, there are advantages related to scale since the same type of electric machine can be used for all four wheels.

The illustrated propulsion system further comprises a power source which here consist of a battery pack 118 and a supercapacitor pack 120. The power source is connected to each of the electric machines 106a-d, 108a-d via at least one power converter in order to provide power to the electric machines. Preferably, two power converters may be used, one for the front wheels and one for the rear wheels, and the propulsion system control unit 112 can be assumed to also control the functionality of the power converters.

According to one embodiment of the invention, the first and the second electric machines 1061, 108a have the same operating power, and the operating power may for example be 25kW. Thereby, assuming that at least two opposing electric machines have to be operated simultaneously for symmetry, the described system can provide power levels ranging from 50kW to 200kW, which is sufficient for a conventional vehicle being operated in normal traffic. An advantage of using relatively small electric machines having an operating power of 25kW is that the described system can consist of electric machines which are both smaller and cheaper compared to other propulsion systems providing the same power but with fewer electric machines. Moreover, a great flexibility in operating modes can be achieved without common drivetrain components such as a prop shaft, front and rear wheel axles, differentials etc., thereby making it possible to also reduce the weight of the described propulsion system compared to some existing propulsion systems comprising fewer electric machines.

Moreover, the first electric machine 104a is advantageously a switched reluctance electric machine and the second electric machine 106a is an AC induction electric machine. A switched reluctance electric machine is capable of highly efficient operation with small losses, but it cannot provide the same amount of torque as an AC induction electric machine having the same operating power. Thereby, the two types of electric machines complement each other so that the vehicle can be operated with high efficiency by the switched reluctance electric machine when low torque is required, such as when cruising or during rush hour stop-and-go traffic. When a higher torque is required, for example for rapid acceleration, the AC induction electric machine can be used, alone or in combination with the switched reluctance electric machine. However, it would in principle be possible to use two identical electric machines for each wheel, i.e. eight electric machines of the same type, which may provide advantages relating to the cost of the system and to maintenance.

The clutch between the first electric machine 106a and the second electric machine 108a is advantageously a friction clutch 110a, which provides a simple and easily controllable solution for connecting and disconnecting the second electric machine 108a from the first electric machine 106a and consequently from the wheel 104a. The clutch 110a-d may for example be an electrically actuated friction clutch which is controlled by the propulsion system control unit 112. Moreover, the propulsion system 100 may further comprise a gearbox 114a arranged between each first electrical machine and a respective wheel, and the gearbox 114a may be a planetary gearbox for providing the appropriate rotational speed to the wheel. The gearbox114a-d can for example be a conventional planetary gearbox having a 10:1 gear ratio. It would however be possible to connect an electric machine directly to the wheel, without an intermediate gearbox, if the electric machine as such comprises gears or the like to provide a suitable rotational speed to the wheel.

The propulsion system control unit 112 is configured to control the propulsion system 100 to operate in one of the following operating modes: two-wheel drive using the first electric machine of the respective front or rear wheels; two-wheel drive using the first and/or second electric machines of the respective front or rear wheels; all-wheel drive using the first electric machine of the respective wheel; all-wheel drive using the first and/or second electric machines of the respective wheel. Accordingly, any combination of two, four, six and eight electric machines operating in opposing pairs can be used for vehicle propulsion. In principle, a large number of different operating modes are thereby available for providing rear wheel drive (RWD), front wheel drive (FWD) and all-wheel drive (AWD).

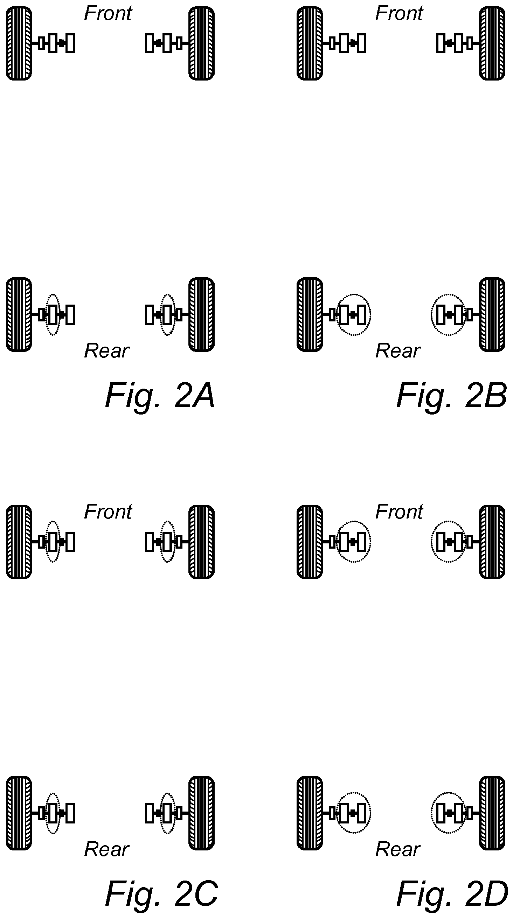

Figs. 2A-D illustrate example operating modes. In Fig. 2A, the first electric machines 106c-d of the rear wheels 104c-d are used which may be suitable for slow-moving rush hour traffic with low torque demands. In Fig. 2B, both the first and second electric machines 106c-d, 108c-d are used to provide rear-wheel drive with more power available in a mode which can be likened to the operation of a rear-wheel driven sports car. Fig. 2C illustrates an operating mode using the first electric machines 106a-d of all four wheels 104a, which may be referred to as a normal operating mode providing an even power distribution to all four wheels when there is no need for high acceleration, for example when driving at cruising speeds. Fig. 2D illustrates all-wheel drive using all eight electric machines 106a-d, 108a-d to provide maximum power to all four wheels 104a-d.

According to one embodiment of the invention, the propulsion system control unit 112 is configured to control the power source 116 to provide power to the first and/or the second electric machine 106a-d, 108a-d from the supercapacitor pack 120 or from the battery pack 118 based on a selected operating mode. The propulsion system control unit 112 is further configured to control the power source to provide power to the first and/or the second electric machines from the supercapacitor pack 120 or from the battery pack 116 based on a requested propulsive power.

A supercapacitor pack 120 is advantageous in that it allows for more power to be released upon acceleration and it is also capable of receiving more power when performing regenerative braking compared to the battery pack 118, or when charging the vehicle. Accordingly, the supercapacitor pack 120 is primarily providing power to the AC induction electric machines 108a-d which is better suited for providing the high torque required for acceleration. Once the cruising speed has been reached or when less acceleration is required, the battery pack 118 can provide power either to the AC induction electric machines 108a-d, to the switched reluctance electric machines 106a-d, or to a combination of the two.

A further advantage of using a supercapacitor pack 120 in the described propulsion system is that it takes away the stressful tasks of providing and receiving high power from the battery pack 118 which may be based on lithium battery cells, thereby increasing the overall lifetime of the battery pack 118 and of the system as a whole.

The propulsion system control unit 112 is further configured to control the propulsion system 100 such that when the vehicle takes off from standstill, the power is taken from the supercapacitor pack 120 until reaching cruising speed or until the power requirement falls below a predetermined threshold. Thereby, under normal, or "soft", take-off, the switch from the supercapacitor pack 120 to the battery pack 118 will occur faster than for hard acceleration take-off. The switch between the supercapacitor pack 120 and the battery pack 118 may for example occur when the accelerator pedal is pressed over 50% of its operating angle, regardless of current vehicle speed and/or acceleration.

The propulsion system control unit 112 is further configured to control the propulsion system 100 to provide power generated by the first and/or second electric machine to the supercapacitor pack 120. All of the electric machines 106a-d, 108a-d can be used for generating power during regenerative braking, where the number of electric machines used is determined by amount of power to be regenerated. For the lowest level of regeneration using only two electric machines, the AC induction electric machines 108a-b of the front wheels 104a-b are used. As in a regular mechanical brake system, the front wheels brake harder than the rear wheels since during braking, the nose of the car dives down and pushes the wheels into the ground increasing the friction. Thereby, breaking with the front wheels is both more effective and more safe. For the next power level of regeneration requiring four electric machines, the AC induction electric machines 108a-d of all four wheels 104a-d are used. Next, also the switched reluctance electric machines 106a-b of the front wheels 104a-b are used and for the highest level of regeneration, all eight electric machines 106a-d, 108a-d are used.

The propulsion system is also equipped with a charger 122 for external charging of the power source. When the vehicle is plugged in to a power grid for charging, the supercapacitor pack 120 is capable of receiving the maximum amount of power that charger 122 can supply, in the least amount of time, without component degradation. When the supercapacitor 120 is full, it will provide all of the stored energy to the lithium battery pack 118, at a controlled rate. After it has done so, the cycle starts all over again with charging of the supercapacitor pack 120. This could be referred to as charging bursts and it has the advantage of allowing the battery pack 118 to cool down while the supercapacitor pack 120 is being charged. Moreover, the battery pack 118 can be charged at a controlled and optimized rate at all times.

According to one embodiment of the invention, there is also provided a method for operating the propulsion system 100 of an electric vehicle. The method comprises: by the propulsion system control unit 112, individually controlling the first second electric machines 106a-d, 108a-d to operate the propulsion system 100 in one of a plurality of predetermined operating modes.

The method further comprises: by the propulsion system control unit 112, controlling the propulsion system 100 to operate in one of the following operating modes: two-wheel drive using the first electric machine of the respective front or rear wheels; two-wheel drive using the first and second electric machines of the respective front or rear wheels; all-wheel drive using the first electric machine of the respective wheel; or all-wheel drive using the first and second electric machines of the respective wheel.

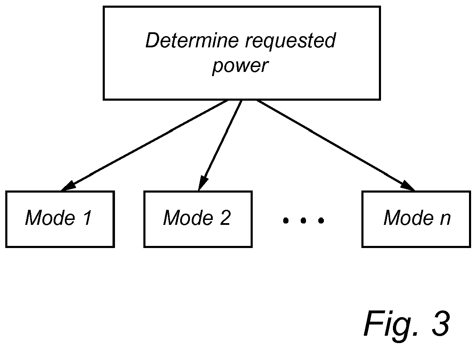

Fig. 3 is a flow chart outlining general steps of the method where the first step comprises determining 300 the requested power for vehicle propulsion, and where one of the available driving modes 1...n is then selected based on the requested power. In principle, any of the driving modes described above can be selected. The requested power may for example be determined by acquiring the operating angle or degree of actuation of a gas pedal. It is also possible to acquire the requested power from an autonomous or semi-autonomous driving system of the vehicle. Moreover, there may optionally be additional input parameters determining which driving mode to use, such as the state of charge of the battery and the supercapacitor, a driving mode selected by the driver, road and traffic conditions etc.

The method further comprises, in a propulsion system 100 comprising a power source having a battery pack 118 and a supercapacitor pack 120 connected to each electric machine via at least one power converter, controlling the power source to provide power to the first and/or the second electric machine from the supercapacitor pack or from the battery pack based on a selected operating mode and/or based on a requested propulsive power.

The method further comprises controlling, by the propulsion system control unit, the propulsion system to provide power generated by the first and/or second electric machine to the supercapacitor pack.

Various examples have been described. These and other examples are within the scope of the following claims. Even though the invention has been described with reference to specific exemplifying embodiments thereof, many different alterations, modifications and the like will become apparent for those skilled in the art. Also, it should be noted that parts of the system may be omitted, interchanged or arranged in various ways, the system yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A propulsion system (100) for a vehicle (102), the propulsion system comprising:
for each wheel (104a-d) of the vehicle, a first electric machine (106a-d) operatively connected to the wheel and a second electric machine (108a-d) connected to the first electric machine via a clutch (1 10a-d), and wherein each of the first and second electric machines is individually controllable by a propulsion system control unit (112) configured to operate the propulsion system in one of a plurality of predetermined operating modes.

2. The propulsion system according to claim 1, wherein the first and the second electric machines have the same operating power.

3. The propulsion system according to claim 1 or 2, wherein the first electric machine is a switched reluctance electric machine.

4. The propulsion system according to any one of the preceding claims, wherein the second electric machine is an AC induction electric machine.

5. The propulsion system according to any one of the preceding claims, wherein the clutch between the first electric machine and the and the second electric machine is a friction clutch.

6. The propulsion system according to any one of the preceding claims, further comprising a gearbox (114a-d) arranged between each first electrical machine and a respective wheel.

7. The propulsion system according to any one of the preceding claims, wherein the gearbox is a planetary gearbox.

8. The propulsion system according to any one of the preceding claims, wherein the propulsion system control unit is configured to control the propulsion system to operate in one of the following operating modes:
- two-wheel drive using the first electric machine of the respective front or rear wheels;
- two-wheel drive using the first and second electric machines of the respective front or rear wheels;
- all-wheel drive using the first electric machine of the respective wheel;
- all-wheel drive using the first and second electric machines of the respective wheel.

9. The propulsion system according to any one of the preceding claims, further comprising a power source (116) comprising a battery pack (118) and a supercapacitor pack (120) connected to each electric machine via at least one power converter.

10. The propulsion system according to claim 9, wherein the power system control unit is configured to control the power source to provide power to the first and/or the second electric machine from the supercapacitor pack or from the battery pack based on a selected operating mode.

11. The propulsion system according to claim 9 or 10, wherein the power system control unit is configured to control the power source to provide power to the first and/or the second electric machines from the supercapacitor pack or from the battery pack based on a requested propulsive power.

12. The propulsion system according to any one of claims 9 to 11, wherein the propulsion system control unit is configured provide power generated by the first and/or second electric machines to the supercapacitor pack.

13. A vehicle comprising a propulsion system according to any one of the preceding claims.

14. Method for operating a propulsion system of an electric vehicle, the propulsion system comprising, for each wheel of the vehicle, a first electric machine operatively connected to the wheel and a second electric machine connected to the first electric machine via a clutch,
wherein the method comprises:
by a propulsion system control unit, individually controlling the first second electric machines to operate the propulsion system in one of a plurality of predetermined operating modes.

15. The method according to claim 14, further comprising:
by the propulsion system control unit, controlling the propulsion system to operate in one of the following operating modes:
- two-wheel drive using the first electric machine of the respective front or rear wheels;
- two-wheel drive using the first and second electric machines of the respective front or rear wheels;
- all-wheel drive using the first electric machine of the respective wheel;
- all wheel drive using the first and second electric machines of the respective wheel.
